**Europäisches Patentamt**

**European Patent Office**

**Office européen des brevets**

(19)

(11) Veröffentlichungsnummer : **0 173 911 B1**

(12) # EUROPÄISCHE PATENTSCHRIFT

(45) Veröffentlichungstag der Patentschrift :
25.05.88

(21) Anmeldenummer : 85110421.6

(22) Anmeldetag : 20.08.85

(51) Int. Cl.⁴ : **G 03 B 15/00**, G 03 B 27/60, G 03 B 42/04

(54) **Planfilmbühne in einem Bildschirm- oder Röntgenaufnahmegerät oder dergleichen Gerät.**

(30) Priorität : 01.09.84 DE 3432258

(43) Veröffentlichungstag der Anmeldung :
12.03.86 Patentblatt 86/11

(45) Bekanntmachung des Hinweises auf die Patenterteilung : 25.05.88 Patentblatt 88/21

(84) Benannte Vertragsstaaten :
FR GB IT

(56) Entgegenhaltungen :
DE-A- 3 310 093

(73) Patentinhaber : Agfa-Gevaert AG
Patentabteilung
D-5090 Leverkusen 1 (DE)

(72) Erfinder : Müller, Jürgen, Dipl.-Ing.
Bozzarisstrasse 7
D-8000 München 90 (DE)
Erfinder : Schindlbeck, Günther, Ing. grad.
Scharfreiterplatz 47
D-8000 München 90 (DE)
Erfinder : Reichart, Michael, Dipl.-Ing.
Rothmundstrasse 8
D-8000 München 2 (DE)

## Beschreibung

Die Erfindung betrifft eine Planfilmbühne in einem Bildschirm- oder Röntgenaufnahmegerät oder dergl. Gerät, die vertikal angeordnet und oben zum automatischen Ein- und Ausführen der Filme offen ist und längs wenigstens einer vertikalen Seite und an der Unterseite feste Führungsleisten mit Nuten zum Einschieben und Haltern eines Films und vorzugsweise eine Saugvorrichtung zum Ansaugen des Films an der Bühnenfläche aufweist.

Planfilmbühnen dieser Art in derartigen Geräten sind gebräuchlich. Gerade auf dem Gebiet der Röntgenaufnahmen und der Bildschirmaufnahmen von Röntgenbildern sind jedoch sehr viele unterschiedliche Filmformate im Gebrauch. Es ist daher eine Materialvergeudung, nur der Filmbühnengröße wegen immer Filme des größten vorgesehenen Formats verwenden zu müssen.

Der Erfindung liegt daher die Aufgabe zugrunde, eine Planfilmbühne der eingangs genannten Art so auszubilden, daß sie mit einfachen Mitteln, die vorzugsweise automatisch ansteuerbar sind, an verschiedene, jeweils benötigte Filmformate anpaßbar sind.

Diese Aufgabe wird erfindungsgemäß gelöst durch die Merkmale des Hauptanspruchs. Weitere vorteilhafte Merkmale der Erfindung sind den Unteransprüchen entnehmbar.

Die Erfindung wird anhand von Zeichnungen näher erläutert. Es zeigen

Fig. 1 eine erfindungsgemäße Blattfilmbühne von der Filmseite her,

Fig. 2 die Rückseite der Filmbühne nach Figur 1 (aus der Stellung nach Figur 1 nach unten geklappt),

Fig. 3 einen Schnitt durch die Filmbühne nach Figur 1 gemäß der Schnittlinie III-III,

Fig. 4 ein Aufnahmegerät, in dem die Filmbühne nach den Figuren 1 bis 3 verwendbar ist,

Fig. 4a bis 4h nach Figur 4 mögliche Bildaufteilungen auf einem Blattfilm.

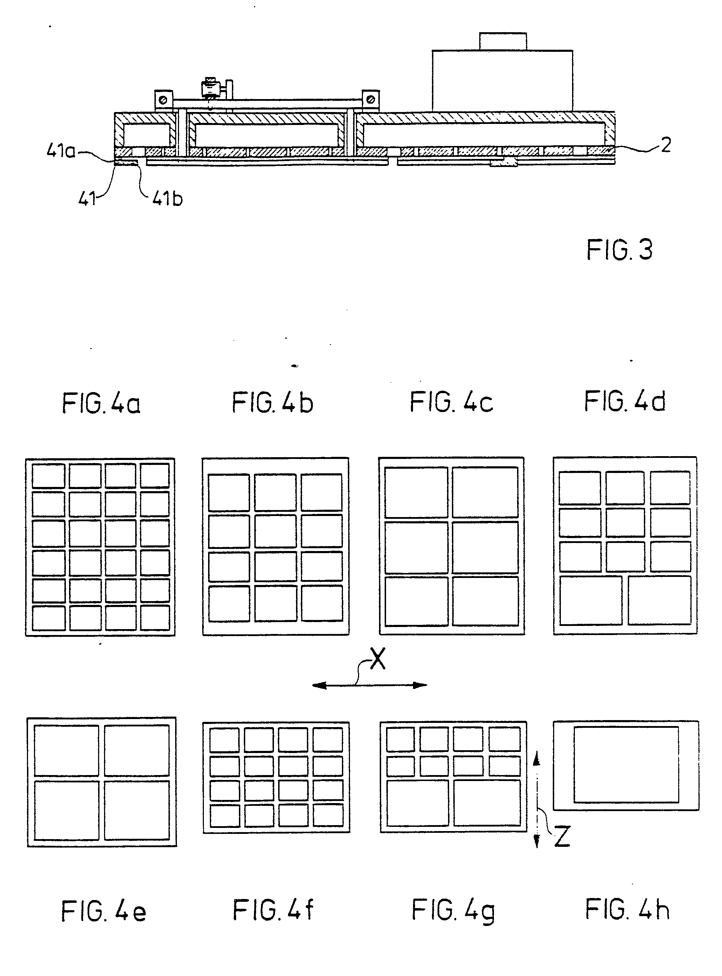

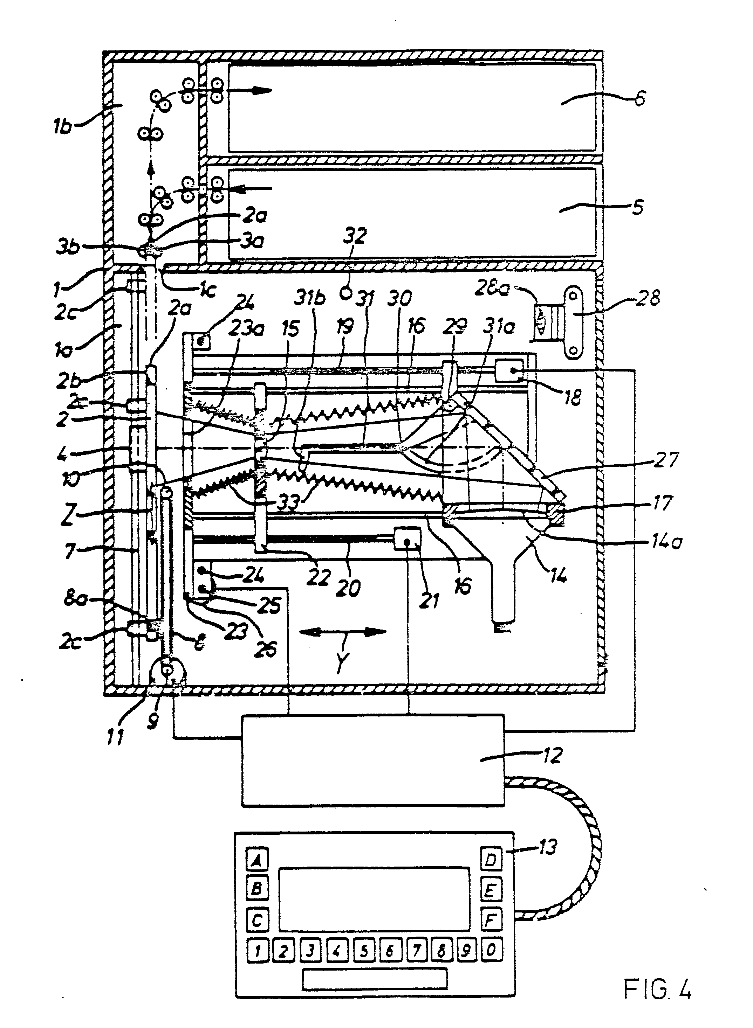

In Figur 4 ist ein vorgeschlagenes Blattfilmaufnahmegerät gezeigt, in dem eine erfindungsgemäße Blattfilmbühne verwendbar ist. Dabei sind ein schematisch dargestelltes Gerätegehäuse mit 1, dessen fotografischer Aufnahmeteil mit 1a und dessen Filmbe- und -entladeteil mit 1b und ein Durchtrittsschlitz zwischen dem Aufnahmeteil 1a und dem Filmbe- und -entladeteil 1b mit 1c bezeichnet. Der Durchtrittsschlitz 1c erstreckt sich in Richtung einer Koordinate, nämlich der X-Koordinate, entsprechend der Breite einer Filmbühne 2 und weist in der hierzu und zur Verschieberichtung Z der Filmbühne 2 senkrechten Richtung Y eine Breite auf, die ausreichend ist, daß die ihm zugewandte Oberkante 2a der Filmbühne 2 bis in den Bereich des Transportwalzenpaares 3a, 3b vom Aufnahmeteil 1a in den Be- und Entladeteil 1b hineingeschoben werden kann. Die Filmbühne 2 weist eine bekannte Ansaugeinrichtung 4 und bekannte Ansauglöcher 40 auf, durch die ein auf die Aufnahmeseite der Filmbühne 2 aufgebrachtes Filmblatt in der durch die vertikale Lage der Filmbühne 2 vorgegebenen vertikalen Stellung sicher gehalten werden kann. Die Oberkante 2a der Filmbühne 2 weist in bestimmten Abständen Ausschnitte 2b auf, während die Transportwalzen 3a, 3b, die bereits im Be- und Entladeteil 1b liegen, in mehrere Walzenpaarstücke 3a, 3b von etwas weniger als der Breite der Ausschnitte 2b aufgeteilt sind und an den Stellen in Richtung X liegen, an denen auch die Ausschnitte 2b liegen. Die Filmbühne 2 ist in später genauer zu beschreibender Weise in vertikaler Richtung, nämlich in Z-Richtung, auf- und abwärts verschiebbar, wobei in ihrer obersten Be- und Entladestellung in ihre Ausschnitte 2b der untere Teil der Walzenpaarstücke 3a, 3b eingreift.

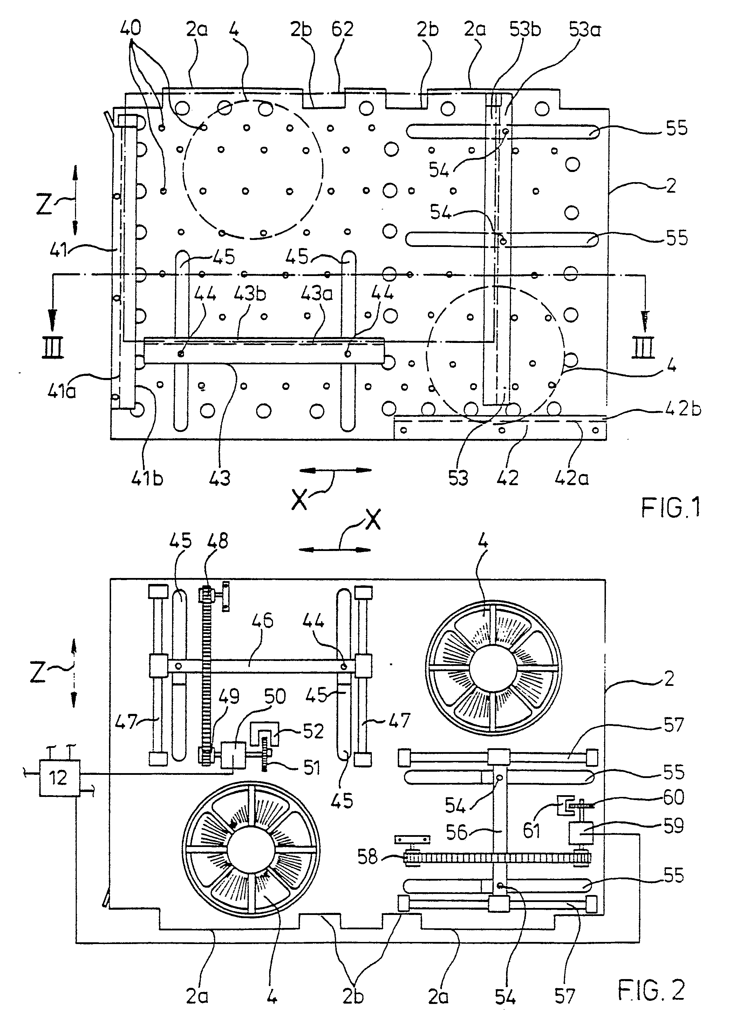

Im Be- und Entladeteil 1b sind in an sich bei Röntgenaufnahmegeräten oder Kassettenbe- und -entladegeräten bekannter Weise Einschübe 5 und 6 oder noch weitere Einschübe vorhanden, von denen mindestens der eine Einschub 5 ein Blattfilmvorratsmagazin mit Transportmitteln zum Transportieren eines Films zu den Walzenpaarstücken 3a, 3b enthält. Entsprechend dem Einschub 5 sind in bekannter und der Einfachheit halber nicht gezeigter Weise weitere hierzu parallele, gleichartige Einschübe vorgesehen für andere Filmformate. Der zweite Einschub 6 kann ein Zwischenmagazin darstellen zum lichtdichten Einführen von belichtetem Film ebenfalls mittels der Walzenpaarstücke 3a, 3b. Genausogut kann aber auch als weiterer Teil im Anschluß an den Be- und Entladeteil 1b direkt eine Entwicklungsmaschine vorgesehen sein. In bekannter Weise sind alle diese Vorrats- oder Zwischenmagazine und ggf. die Entwicklungsmaschine einerseits in ihrer Funktionsstellung lichtdicht ausgeführt. Da dies aber an sich bekannt und auf jede bekannte Weise ausführbar und für die vorliegende Erfindung nicht wesentlich ist, sind ohne Bezugsziffern in Figur 4 nur noch die vor bzw. nach den Walzenpaarstücken 3a, 3b vorgesehenen weiteren Transportwalzenpaare schematisch angedeutet. Zum Be- bzw. Entladen wird die Filmbühne 2 bis in ihre oberste, in Figur 1 strichpunktiert angedeutete Stellung bewegt, wobei dann zu entladender Film, der in den Ausschnitten 2b zugänglich liegt, unter Abschaltung der Ansaugvorrichtung durch die Walzenpaarstücke 3a, 3b erfaßt und dem Zwischenmagazin 6 bzw. der Entwicklungsmaschine zugeführt wird. Umgekehrt wird neu einzuführender Film dem Vorratsmagazin entnommen und wieder über die Walzenpaarstücke 3a, 3b der Filmbühne 2 zugeführt. Wenn er dort seine richtige Lage einnimmt, tritt die Ansaugvorrichtung 4, 40 wieder in Funktion, und die Filmbühne 2 wird in ihre Arbeitsstellung heruntergefahren.

Für die Lagerung der Filmbühne 2 ist jede für eine bekannte, exakte Parallelverschiebung in einer Richtung geeignete, schritt- oder abschnittweise antreibbare mechanische oder mechanisch-elektrische Verschiebevorrichtung verwendbar. Beim gezeigten Ausführungsbeispiel sind an der Bühnenrückseite mehrere Arme 2c mit exakten Bohrungen vorgesehen, die an wenigstens zwei parallelen Stangen, von denen nur eine Stange 7 sichtbar ist, vertikal verschiebbar sind. Ein Zahnriemenantrieb 8 oder Seilzug ist über zwei Rollen 9, 10 mittels eines Elektromotors 11 von einer Steuerschaltung 12 aus um bestimmte Wegstrecken antreibbar und an einer Stelle 8a mit der Filmbühne 2 verbunden, so daß bei Bewegung des Zahnriemens oder Seilzugs 8 die Filmbühne 2 um entsprechende Stücke aufwärts bzw. abwärts in Richtung Z mitgenommen wird. Die entsprechenden Wegstrecken richten sich nach der an einer Wähltastatur 13 vorgewählten Funktion, wobei beispielsweise bei einer Einteilung und Größe der aufzunehmenden Bilder gemäß Figur 4a die Filmbühne 2 in Z-Richtung je Spalte sechs gleiche Schritte, z. B. zuerst nach aufwärts für die erste Aufnahmespalte und dann wieder nach abwärts für die zweite Aufnahmespalte und wieder nach aufwärts für die dritte Aufnahmespalte und wieder nach abwärts für die vierte Aufnahmespalte ausführt. Bei entsprechend anders aufgeteilten, vorwählbaren Aufnahmefeldeinteilungen, z. B. nach den Figuren 4b bis 4h sind die Schritte der Filmbühne 2 in Z-Richtung entsprechend anders programmiert. Die Bühne 2 führt dabei nur eine Auf- oder Abwärtsbewegung in Z-Richtung durch.

Um nun Aufnahmen auf dem Film nicht nur in vertikalen Spalten, sondern auch in horizontalen Reihen, also in X-Richtung nebeneinander und außerdem in verschiedenen Größen aufnehmen zu können, ist ein Monitor 14, dessen Bildschirm 14a abfotografiert werden soll, in den beiden zur Verschieberichtung Z der Filmbühne 2 senkrechten Richtungen X und Y verschiebbar gelagert. Der Bildschirm 14a könnte dabei parallel zur Filmbühne 2 und zwischen beiden könnte einstellbar ein Aufnahmeobjektiv 15 angeordnet sein. Gemäß dem gezeigten Ausführungsbeispiel liegt jedoch der abzufotografierende Bildschirm 14a horizontal nach oben gerichtet in der X-Y-Ebene. Der Monitor 14 ist dabei an in Y-Richtung verlaufenden parallelen Trägerstangen 16 eines Rahmens 17 mit nicht näher gezeigten Bohrungen verschiebbar, und zwar mittels einer über einen zweiten Elektromotor 18 angetriebenen Spindel 19. An den Führungsstangen 16 ist auch das Objektiv 15 mittels einer weiteren Spindel 20 verschiebbar geführt. Die weitere Spindel 20 ist durch einen dritten Elektromotor 21 antreibbar. Die Steuerung der einer gewählten oder programmierten Vergrößerung bzw. Verkleinerung einer Bildschirmaufnahme entsprechenden Lage von Objektiv 15 und Bildschirm 14a in Y-Richtung erfolgt wiederum über die Steuerschaltung 12 entsprechend dem in der Wähltastatur 13 ausgewählten Programm. Die Führungsstangen 16 mit den Trägern 17 und 22 für Monitor 14 und Objektiv 15 sind an einer zur Filmbühne 2 parallelen, ein Belichtungsfenster oder eine Bildfeldblende 23a aufweisenden Hauptträgerplatte 23 gehalten, die ihrerseits an in X-Richtung verlaufenden, im Gehäuse 1 befestigten Führungsstangen 24 in X-Richtung verschiebbar gelagert und durch eine dritte Spindel 25 mittels eines vierten Elektromotors 26 schrittweise vor Bild zu Bild jeder Bildzeile verschiebbar ist. Auch dieser vierte Elektromotor 26 wird durch die Steuerschaltung 12 entsprechend einem geplanten Programm gesteuert.

Die Einstellung einer Vergrößerung bzw. Verkleinerung der abzufotografierenden Bildschirmbilder erfolgt also durch entsprechende Verschiebung von Objektiv 15 und Bildschirm 14a in Y-Richtung, das Aufnehmen der Bilder in einer vertikalen Spalte durch Verschieben der Filmbühne 2 in Z-Richtung bei stillstehendem Bildschirm 14a und das Aufnehmen der Bilder in einer horizontalen Spalte durch Verschieben des Bildschirms 14a zusammen mit dem Objektiv 15 in X-Richtung bei stillstehender Filmbühne 2.

Nachdem gemäß dem gezeigten Ausführungsbeispiel der Bildschirm 14a horizontal liegt, muß zwischen Bildschirm 14a und Objektiv 15 ein gegenüber beiden um 45° geneigter Umlenkspiegel 27 zusammen mit dem Bildschirm 14a verschiebbar gelagert sein. Um diesen Spiegel 27 einerseits reinigen zu können und andererseits in eine weitere Stellung schwenken zu können, in der er gemäß Fig. 2 eine um 90° gedrehte Stellung zum Abbilden des Bildschirmbildes durch das Objektiv 28a einer Rollfilmkammer 28 auf deren Filmebene einnimmt, ist der Umlenkspiegel 27 in dem Monitorträgerrahmen 17 um eine Achse 29 schwenkbar gelagert. Die zur Achse 29 parallele, dieser entfernter liegende Kante des Spiegels 27 liegt unter der Wirkung der Schwerkraft in der normalen Stellung für Planfilmaufnahmen auf dem Rand des Monitors 14 oder einem Anschlag auf. An wenigstens einem in einer Y-Z-Ebene liegenden Winkel des Spiegels 27 ist ein in X-Richtung verlaufender Steuerstift 30 angeordnet, der in eine gerätefeste Schlitzkurve 31 eingreift. In ihrem einen Endbereich 31a, in dem der Spiegel 27 am weitesten von der Filmbühne 2 entfernt ist, ist die Schlitzkurve 31 als Kreisbogen um die Drehachse 29 ausgebildet, so daß der Spiegel 27 aus der Stellung nach Fig. 1 entgegen dem Uhrzeigersinn durch einen angedeuteten, verschließbaren Deckel des Gehäuses nach oben zu Reinigungszwecken von Hand schwenkbar ist. An ihrem filmbühnennahen Ende weist die Schlitzkurve 31 ein kleines Kurvenstück 31b auf, das so geformt ist, daß der Spiegel 27 beim Weiterbewegen des Monitors 14 über dessen Endstellung für Planfilmaufnahmen hinaus in die in Figur 2 gezeigte, um 90° entgegen dem Uhrzeigersinn nach oben geneigte Stellung bis zu einem Anschlag 32 hochgeschwenkt wird. In dieser Stellung wird das Bildschirmbild des Monitors 14 dann in das Objektiv 28a der Rollfilmkammer 28 geworfen. Diese ist ebenfalls durch den oder einen weiteren Gehäusedeckel zugänglich und auf diese Weise oder mittels einer Fernbedienungsvorrichtung bedienbar. Sie ist auf irgend eine bekannte Weise im Gerät 1 bzw. im Aufnahmeraum 1a lösbar befestigt. Zwischen Planfilmbühne 2, Objektiv 15 und Trägerarmen 17 für den Motor sind naturgemäß lichtdichte Balgen 33 vorgesehen.

Wie eingangs schon erwähnt, gibt es Geräte der beschriebenen oder ähnlicher Art, z. B. Röntgenaufnahmegeräte, bei denen nicht nur auf einem einzelnen Blattfilm mehrere unterschiedlich große und unterschiedlich angeordnete Einzelbilder nacheinander aufgenommen werden können, sondern bei denen Blattfilme verschiedener Formate wahlweise verwendbar sind. In diesem Falle sind dann mehrere Schubfächer für unterschiedliche oder gleiche Dispensermagazine 5, wobei dann unterschiedlich große Einsätze für unterschiedliche Filmgrößen vorhanden sind, und entsprechende Transportmittel je Schubfach übereinander angeordnet, wobei durch eine Steuerung die gewünschte Filmgröße bzw. das entsprechende Schubfach angesteuert werden. Derartige Anordnungen sind bei Röntgenfilmkassettenent- und -beladegeräten bekannt. In Anwendung auf das beschriebene Gerät 1 muß die Auswahl der gewünschten Blattfilmgröße und Bildaufteilung, vgl. z. B. Fig. 4a bis 4h, ebenfalls über die Tastatur 13 und die Steuerschaltung 12, in der diese Auswahlmöglichkeit dann noch programmiert sein muß, erfolgen.

Sollen nun in einem Gerät 1 oder einem ähnlichen Gerät Aufnahmen auf unterschiedliche Filmformate möglich sein, so muß auch die Filmbühne 2 so beschaffen sein, daß die auswählbaren Blattfilme unterschiedlicher Größe dort in einer exakten Lage fixierbar sind. Für die Anschlaglage der Filme aller Formate an einer vertikalen Bühnenseite (in Figur 1 ist es die linke Bühnenseite) ist längs dieser (linken) Bühnenseite eine Leiste 41 filmseitig befestigt. Sie ist stufenförmig ausgebildet, wobei die Stufe 41a geringfügig größer ist als die normale Filmdicke, so daß eine vorstehende Rippe 41b einen durch die Transportmittel 3a, 3b in die Bühne geschobenen, in der Stufe 41a anliegenden Film zu seiner Halterung und Führung übergreift. Für das größte Filmformat ist im gegenüberliegenden (rechten) Teil der unteren Bühnenkante eine nur über einen kleineren Teil der Bühnenbreite reichende, der Leiste 41 ähnliche Leiste 42, 42a, 42b befestigt.

Zwischen der in X-Stellung verlaufenden, festen Leiste 42 und der in Z-Richtung verlaufenden, festen Leiste 41 ist parallel zur X-Richtung verschiebbar eine der Leiste 42 gleichartige, parallele Leiste 43, 43a, 43b geführt. In ihrer tiefsten Stellung fluchtet sie mit der Leiste 42. Zur Einstellung auf kleinere Filmformate ragen zwei in ihr angeordnete Stifte 44 durch zwei zur Z-Richtung parallele Führungsschlitze 45 der Bühne 2 und sind auf der Hinterseite der Bühne 2 an einer zur X-Richtung parallelen Schiene 46 ebenfalls befestigt. Die Schiene 46 ist an zwei parallelen, in Z-Richtung verlaufenden Führungsstangen 47 zusammen mit der Leiste 43 in die für das jeweils gewählte Format geeignete Stellung verschiebbar. Hierzu ist die Schiene 46 an einer Stelle eines in Z-Richtung umlaufenden Zahnriemens 48 befestigt, der mittels eines Zahnrades 49 von einem Elektromotor 50 antreibbar ist. Der Motor 50 ist mit der Steuerschaltung 12 und über diese mit der Wähltastatur verbunden. Außerdem treibt er einen Zählteil 51 einer Lichtschranke 51, 52 an. Dieses Zählteil 51 wird bei Motorlauf mitangetrieben, so daß die Lichtschranke die durch den Motor 50 bewirkten Bewegungsschritte der Leiste 43 in Z-Richtung zählt. Entspricht diese Zahl der Schritte dem vorgewählten Format, so wird über die Steuerschaltung 12 der Motor 50 abgeschaltet.

Spiegelbildlich zur Leiste 41 ist eine weitere Leiste 53, 53a, 53b verschiebbar gelagert, die die zweite vertikale Begrenzung für ein Filmblatt gewählter Größe bildet. Sie ist in zur Leiste 43 analoger Weise gelagert, verschiebbar und gesteuert, wobei Stifte 54 durch in X-Richtung verlaufende, parallele Schlitze 55 greifen und an der Schiene 56 befestigt sind. Die Schiene 56 ist an in X-Richtung verlaufenden Stangen 57 parallel geführt und wird wieder über einen endlosen Zahnriemen 58 mittels eines Motors 59 angetrieben. Zur Zählung der Einstellschritte dient wiederum eine mit dem Motor gekuppelte Zählscheibe 60, die eine Lichtschranke 61 durchläuft. Die Einstellung der Leiste 53 für ein auf der Wähltastatur 13 vorgewähltes Format erfolgt wieder durch die Zählung der Einstellschritte an der Lichtschranke 60, 61 und die Motorabschaltung mittels der Steuerschaltung 12.

Während für das größtmögliche Filmformat die Einstellung der Leiste 43 so gesteuert wird, daß sie mit der Leiste 42 fluchtet, und die vertikale Leiste 53 an den rechten Rand der Bühne hin verschoben wird, werden die Leisten 43 und 53 beispielsweise für das strichpunktiert in Figur 1 eingezeichnete Filmformat 62 automatisch durch die Wähltastatur 13 und die Steuerschaltung 12 in die in Figur 1 gezeigte Stellung gebracht. Durch die in den Figuren 1 bis 3 der gezeigte Anordnung ist also eine einfache, nämlich mit relativ einfachen, großenteils gleichgeformten Teilen 41, 42, 43, 53 bzw. 45, 55 bzw. 46, 56 bzw. 47, 57 bzw. 50, 59 bzw. 51, 60 ausgestaltete, auf verschiedene Filmformate einstellbare Filmbühne 2 geschaffen worden, die trotz ihrer Einfachheit mit in der Elektronik bekannten Mitteln automatisch für verschiedene Filmformate anwählbar und auf die gewählten Formate einstellbar ist.

**Patentansprüche**

1. Planfilmbühne (2) in einem Bildschirm- oder Röntgenaufnahmegerät oder dergl. Gerät, die vertikal angeordnet und oben zum automatischen Ein- und Ausführen der Filme offen ist und längs wenigstens einer vertikalen Seite und an der Unterseite feste Führungsleisten (41, 42) mit Nuten zum Einschieben und Haltern eines Films und vorzugsweise eine Saugvorrichtung (4) zum Ansaugen des Films an der Bühnenfläche aufweist, dadurch gekennzeichnet, daß die untere Führungsleiste (42) nur über einen kleinen, der anderen vertikalen Seite benachbarten Teil der Unterseite reicht und daß in dem Bereich zwischen der einen unteren festen Führungsleiste und der verti-

kalen festen Führungsleiste (41) eine zur unteren festen Führungsleiste (42) parallele Führungsleiste (43) parallel zur unteren, festen Führungsleiste (42) verschiebbar gelagert ist.

2. Planfilmbühne nach Anspruch 1, dadurch gekennzeichnet, daß parallel zur festen vertikalen Führungsleiste (41) eine zu dieser spiegelbildlich ausgebildete Führungsleiste (53) verschiebbar gelagert ist, die maximal bis zur unteren festen Führungsleiste (42) nach unten reicht und vom äußeren Bühnenrand nur bis zur verschiebbaren unteren Führungsleiste (43) verschiebbar geführt ist.

3. Planfilmbühne nach Anspruch 1 und 2, dadurch gekennzeichnet, daß die verschiebbaren Führungsleisten (43, 53) mit Stiften (44 bzw. 54) je mindestens zwei zu ihrer Verschieberichtung (Z bzw. X) parallele Schlitze (45 bzw. 55) durchgreifen und die Stifte (43, 53) an je einer zur jeweiligen Führungsleiste (43 bzw. 53) parallelen Schiene (46, 56) befestigt sind, und daß die Schienen (46, 56) je an zwei Führungsstangen (47 bzw. 57) in ihrer Verschieberichtung (Z bzw. X) verschiebbar geführt sind.

4. Planfilmbühne nach Anspruch 3, dadurch gekennzeichnet, daß an einer Stelle jeder Schiene (46 bzw. 56) ein in der jeweiligen Verschieberichtung (Z bzw. X) umlaufender Riementrieb, vorzugsweise Zahnriementrieb (48, 58) befestigt ist, der durch einen Elektromotor (50 bzw. 59) antreibbar ist.

5. Planfilmbühne nach Anspruch 4, dadurch gekennzeichnet, daß jedem Motor (50 bzw. 59) bzw. Riementrieb eine Zählscheibe (51 bzw. 60) bzw. Zählfahnen zugeordnet sind, die eine Zähllichtschranke (52 bzw. 61) für die Zählung der Verschiebeschritte einer Führungsleiste (43 bzw. 53) durchlaufen, und daß jede Zähllichtschranke (52 bzw. 61) mit einer Steuerschaltung (12) und einer Formatwähltastatur (13) verbunden ist.

**Claims**

1. Flat film stage (2) in a projecting screen unit or X-ray photographic apparatus or the like, which stage is arranged vertically and open at the top for the automatic introduction and removal of films and has fixed guide bars (41, 42) along at least one vertical side and on the underside with grooves for inserting and holding a film and preferably a suction device (4) for sucking the film against the surface of the stage, characterised in that the lower guide bar (42) extends only over a small part of the underside adjacent to the other vertical side and in that in the region between the one lower fixed guide bar and the vertical fixed guide bar (41) there is a guide bar (43) which extends parallel to the lower fixed guide bar (42) and is mounted to be displaceable in a direction parallel to the lower fixed guide bar (42).

2. Flat film stage according to claim 1, characterised in that a guide bar (53) which is designed as a mirror image to the fixed vertical guide bar (41) is mounted to be displaceable parallel to said fixed guide bar (41), which guide bar (53) extends downwards at the most as far as the lower fixed guide bar (42) and is guided to be displaced from the outer edge of the stage only as far as the displaceable lower guide bar (43).

3. Flat film stage according to claims 1 and 2, characterised in that the displaceable guide bars (43, 53) have pins (44 and 54, respectively) extending in each case through at least two slots (45 and 55, respectively) which are parallel to their direction of displacement (Z and X), the pins (43, 53) being attached in each case to a rail (46 and 56) which is parallel to the respective guide bar (43 and 53), and in that each of these rails (46 and 56) is guided to be displaceable in its direction of displacement (Z and X, respectively) along two guide rods (47 and 57).

4. Flat film stage according to claim 3, characterised in that fixed to a position on each rail (46 and 56) there is a belt drive rotating in the respective direction of displacement (Z or X), preferably a toothed belt drive (48, 58), which is arranged to be driven by an electric motor (50 and 59).

5. Flat film stage according to claim 4, characterised in that associated with each motor (50 and 59) and belt drive there is a counting dial (51 and 60) or counting lugs passing through a counting light barrier (52 and 61) for counting the steps of displacement of a guide bar (43 and 53), and in that each counting light barrier (52 and 61) is connected to a control circuit (12) and a format selector keyboard (13).

**Revendications**

1. Porte-film (2) pour pellicule rigide dans un appareil de radiographie à écran ou de prise de vues radiographiques, ou dans un appareil analogue, ce porte-film étant agencé verticalement et étant ouvert pour l'introduction et l'extraction automatique des films et présentant, le long d'au moins un côté vertical et sur le côté inférieur, des baguettes de guidage fixes (41, 42) avec rainures pour l'introduction et le maintien d'un film, et présentant de préférence un dispositif d'aspiration (4) pour appliquer le film par effet de ventouse contre la surface du porte-film, caractérisé par le fait que la baguette de guidage inférieure (42) ne s'étend que sur une petite partie du côté inférieur, voisine de l'autre côté vertical, et par le fait que, dans la région située entre la baguette de guidage inférieure fixe et la baguette de guidage verticale fixe (41), une baguette de guidage (43) parallèle à la baguette de guidage inférieure fixe (42) est montée mobile en translation parallèlement à la baguette de guidage inférieure fixe (42).

2. Porte-film selon revendication 1, caractérisé par le fait qu'une baguette de guidage (53) aménagée symétriquement par rapport à la baguette de guidage verticale fixe (41), est montée parallèlement à cette baguette de guidage verticale (41), de manière à être mobile en translation, et s'étend vers le bas, au maximum jusqu'à la baguette de guidage fixe inférieure (42), et est guidée, avec possibilité de déplacement en translation, par le bord extérieur du porte-film, cela seulement jusqu'à la baguette de guidage mobile inférieure (43).

3. Porte-film selon revendications 1 et 2, caractérisé par le fait que les baguettes de guidage mobiles (43, 53) sont munies de broches (44, 54) qui traversent au moins deux fentes (45, 55) parallèles à la direction (respectivement Z, X) du déplacement de ces baguettes, ces broches étant fixées chacune à un rail (46, 56) parallèle à la baguette de guidage concernée (43, 53), et par le fait que les rails (46, 56) sont guidés avec possibilité de déplacement en translation sur leur direction de déplacement (Z, X) sur deux tiges de guidage (respectivement 47, 57).

4. Porte-film selon revendication 3, caractérisé par le fait qu'en un endroit de chaque rail (46, 56) est fixé un système à courroie, de préférence à courroie crantée (48, 58), circulant dans la direction de déplacement concernée (respectivement Z, X), ce système à courroie pouvant être entraîné par un moteur électrique (respectivement 50, 59).

5. Porte-film selon revendication 4, caractérisé par le fait qu'un disque de comptage (51, 60) ou des dents de comptage sont associés à chaque moteur (50, 59) ou à chaque système à courroie, ces disques ou dents de comptage interceptant un barrage photoélectrique (respectivement 52, 61), cela pour compter les pas de déplacement d'un rail de guidage (respectivement 43, 53), et par le fait que chaque barrage photoélectrique de comptage (respectivement 52, 61) est relié à un circuit de commande (12) et à un clavier de sélection de format (13).

FIG.1

FIG.2

41a

41 41b

FIG. 3

FIG. 4a    FIG. 4b    FIG. 4c    FIG. 4d

X

FIG. 4e    FIG. 4f    FIG. 4g    FIG. 4h

Z

2

FIG. 4